# FASCICULE DE BREVET EUROPEEN

(11) **EP 4 642 613 B1**
(45) Date de publication et mention de la délivrance du brevet: **11.11.2026**
(21) Numéro de dépôt: 23818487.3
(22) Date de dépôt: 06.12.2023
(51) Int. Cl.: B29C 49/78, B29C 49/06, B29C 49/64, B29K 67/00, B29L 31/00, G01N 21/00, G01N 21/59, G01N 21/84

(54) **PROCEDE ET INSTALLATION POUR LA DETERMINATION D'UNE VALEUR REPRESENTATIVE DU COEFFICIENT D'ABSORPTION D'UNE PREFORME**
VERFAHREN UND ANLAGE ZUR BESTIMMUNG EINES FÜR DEN ABSORPTIONSKOEFFIZIENTEN EINER VORFORM REPRÄSENTATIVEN WERTES
METHOD AND FACILITY FOR DETERMINING A VALUE REPRESENTATIVE OF THE ABSORPTION COEFFICIENT OF A PREFORM

(30) Priorité: 26.12.2022 FR 2214488
(43) Date de publication de la demande: 05.11.2025
(73) Titulaire: Sidel Participations, 76930 Octeville-sur-Mer (FR)
(72) Inventeur: FEUILLOLEY, Guy, 76930 OCTEVILLE-SUR-MER (FR); LANGLOIS, Nicolas, 76930 OCTEVILLE-SUR-MER (FR); DERRIEN, Mikael, 76930 OCTEVILLE-SUR-MER (FR)
(74) Mandataire: Sidel Group
(86) Numéro de dépôt international: PCT/EP2023/084570
(87) Numéro de publication internationale: WO 2024/141232

(56) Documents cités:
- EP-A1- 4 063 833
- FR-A1- 3 074 714
- US-A1- 2003 223 086
- US-A1- 2006 074 614
- US-A1- 2019 070 771
- US-A1- 2022 024 110

## Description

### Domaine technique de l'invention

L'invention propose un procédé de détermination d'une valeur représentative du coefficient d'absorption d'un matériau thermoplastique constituant une préforme, lorsque la préforme est transportée le long d'un trajet prédéterminé dans une installation de fabrication de récipients par formage de préformes, ainsi qu'une installation apte à mettre en œuvre ce procédé. Des procédé et installations apparentés et selon l'art antérieur, sont décrits dans les documents EP4063833A1, US2022/024110A1, US2006/074614A1 et US2003/223086A1.

### Arrière-plan technique

Il est connu de fabriquer des récipients par formage, notamment par étirage-soufflage, de préformes en matériau thermoplastique. Le matériau formant les préformes est généralement dans un état amorphe qui n'est pas apte à permettre leur formage à froid. Préalablement à l'opération de formage, les préformes sont donc chauffées à une température supérieure ou égale à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison il est préférable que seul le corps de la préforme soit chauffé au-delà de la température de transition vitreuse, le col demeurant à une température inférieure à ladite température de transition vitreuse pour éviter sa déformation pendant la fabrication du récipient.

Par ailleurs, la température du corps ne doit pas non plus dépasser une température de cristallisation qui est supérieure à la température de transition vitreuse. Au-delà de cette température de cristallisation, le matériau thermoplastique se cristallise et ne présente plus les propriétés mécaniques permettant de réaliser un formage de qualité requise. Il est important que la cristallisation du matériau ne soit induite, de manière maîtrisée, que pendant l'opération de formage afin que les chaînes polymériques soient orientées dans des directions requises.

La fabrication de récipients en grande série est réalisée dans une installation de production dans laquelle les préformes défilent le long d'un trajet de production prédéterminé. Chaque préforme est prise en charge par des moyens de convoyage. Un tel moyen de convoyage peut être formé par un convoyeur à rail le long duquel les préformes sont libres de venir au contact les unes des autres ou un convoyeur qui comporte des organes de préhension de chaque préforme individuellement.

L'installation de production comporte une station de chauffage qui permet, lors d'une étape de chauffage, de rendre malléable le corps de la préforme par chauffage au-delà de la température de transition vitreuse. Lors de l'étape de chauffage, chaque préforme est exposée à un rayonnement chauffant lors de son déplacement.

L'installation de production comporte aussi une station de formage qui est agencée en aval de la station de chauffage selon le sens de circulation des préformes dans l'installation de production. Lors de l'étape de formage, la préforme chaude est placée dans une unité de formage, par exemple dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. Généralement, l'injection de fluide sous pression est précédée et/ou accompagnée d'un étirage axial de la préforme, notamment au moyen d'une tige d'étirage insérée dans la préforme. De manière connue, le corps est ainsi soumis à un étirage bi-axial.

Lors de son passage dans la station de chauffage, chaque préforme est généralement exposée à un rayonnement infrarouge qui permet de chauffer le matériau thermoplastique. La température à laquelle les préformes sont chauffées dépend du facteur d'absorption (A) de la préforme pour les longueurs d'ondes du rayonnement infrarouge. Le facteur d'absorption (A) est parfois désigné par son nom anglais d'« absorptance ».

Le facteur d'absorption (A) est défini comme étant le rapport entre flux de rayonnement chauffant absorbé et le flux de rayonnement chauffant incident. Le flux de rayonnement chauffant absorbé provoque une élévation de température du matériau thermoplastique composant la préforme. Le facteur d'absorption (A) de la préforme permet ainsi de connaître l'élévation de température d'une préforme en fonction de l'intensité du rayonnement infrarouge et de la durée d'exposition audit rayonnement. Moins d'énergie est nécessaire pour chauffer une préforme présentant un facteur d'absorption (A) élevé par rapport à une préforme présentant un facteur d'absorption (A) plus faible.

Le facteur d'absorption (A) peut être déduit de deux autres paramètres appelés le facteur de transmission (T) de la préforme ainsi que de son facteur de réflexion (R).

Le facteur de transmission (T), parfois appelée « transmittance », est définie comme le rapport entre le flux de rayonnement chauffant transmis à travers au moins une paroi de la préforme et le flux de rayonnement chauffant incident.

Le facteur de réflexion (R), aussi appelée réflectance, est définie comme étant le rapport entre le flux de rayonnement chauffant réfléchie par la préforme et le flux de rayonnement chauffant incident. La réflectance (R) est par exemple calculée en fonction de l'indice de réfraction (n) du matériau thermoplastique selon la formule suivante : $R = {\left[\left(n-1\right)/\left(n+1\right)\right]}^{2}$ dans laquelle la valeur « 1 » correspond à l'indice de réfraction de l'air.

Ces trois facteurs dépendent de la longueur d'onde du rayonnement considéré. Etant donné que les préformes sont chauffées au moyen de rayonnements chauffants appartenant au domaine de l'infrarouge proche, la longueur d'onde considérée est prise dans ce domaine.

Ces trois facteurs sont liés entre eux par l'équation suivante : $A = 1 - R - T$

Cependant, le facteur d'absorption obtenu dépend principalement de deux paramètres. Tout d'abord le facteur d'absorption dépend du coefficient d'absorption, parfois appelé absorbance, du matériau thermoplastique. Le coefficient d'absorption est une caractéristique intrinsèque du matériau thermoplastique qui ne dépend pas de la géométrie de la préforme. De plus, le facteur d'absorption dépend très fortement de la géométrie de la préforme considérée, et notamment de son épaisseur.

Des préformes appartenant à un même lot sont censées être réalisées avec un matériau thermoplastique présentant les mêmes caractéristiques, et elles sont censées présenter une paroi de même épaisseur. Or lorsqu'une valeur de facteur d'absorption est déterminée pour deux préformes d'un même lot, il n'est pas possible de savoir quelle proportion du défaut provient de la géométrie de la préforme ou de la composition du matériau thermoplastique.

On connaît déjà des installations de production qui sont équipées de dispositifs de mesure du facteur de transmission qui permettent de mesurer le facteur de transmission de la préforme en mesurant l'atténuation d'un signal infrarouge de longueur d'onde définie, transversant deux parois de la préforme.

Dans ces installations seul le facteur de transmission est mesuré. Aucune information n'est donnée quant à la mesure de l'épaisseur de la préforme. Ainsi, bien que certains documents emploient abusivement les termes « absorbance » ou « coefficient d'absorption », ils ne permettent en fait d'obtenir que le facteur d'absorption de la préforme analysée car aucun de ces documents ne fait intervenir l'épaisseur des préformes considérées.

Dans les solutions existantes, cette mesure permet de modifier les paramètres de fonctionnement du four afin de les adapter au facteur d'absorption des préformes.

Cependant, les installations connues ne permettent pas d'analyser avec suffisamment de précision les préformes pour savoir si d'éventuels défauts de production sont dus au fonctionnement de la station de chauffage, à la géométrie des préformes ou à la composition du matériau thermoplastique.

Ce problème est d'autant plus critique lorsque les préformes sont réalisé avec des matériaux plastiques recyclés, tel que du polyéthylène téréphtalate recyclé (rPET), qui sont par natures moins homogènes que des matériaux plastiques vierges.

En outre, il peut aussi être intéressant de comparer les matériaux thermoplastiques constituant des préformes de lots différents ou de formats différents afin d'identifier rapidement d'éventuels problèmes de qualité en lien avec un fournisseur particulier.

### Résumé de l'invention

L'invention propose un procédé de détermination d'une valeur représentative du coefficient d'absorption d'un matériau thermoplastique constituant une préforme, lorsque la préforme est transportée le long d'un trajet prédéterminé dans une installation de fabrication de récipients par formage de préformes, le procédé étant caractérisé en ce qu'il comporte :
- une étape de mesure d'une valeur représentative du facteur de transmission d'un rayonnement infrarouge à travers au moins une paroi de la préforme pendant son déplacement le long du trajet ; et
- une étape de mesure de l'épaisseur de ladite paroi de ladite préforme pendant son déplacement le long du trajet ;
- une étape de calcul de la valeur représentative du coefficient d'absorption du matériau plastique indépendante de l'épaisseur de la préforme à partir de ladite mesure de la valeur représentative du facteur de transmission et de ladite mesure de l'épaisseur.

Selon une autre caractéristique du procédé réalisé selon les enseignements de l'invention, la mesure de la valeur représentative du facteur de transmission et la mesure de l'épaisseur sont réalisées à la même hauteur de la paroi de la préforme.

Selon une autre caractéristique du procédé réalisé selon les enseignements de l'invention, la mesure de la valeur représentative du facteur de transmission et la mesure de l'épaisseur sont réalisées au même point de la paroi de la préforme.

Selon une autre caractéristique du procédé réalisé selon les enseignements de l'invention, la mesure de la valeur représentative du facteur de transmission et la mesure de l'épaisseur sont réalisées successivement en deux zones de mesure distinctes du trajet de production.

Selon une autre caractéristique du procédé réalisé selon les enseignements de l'invention, la mesure de la valeur représentative du facteur de transmission et la mesure de l'épaisseur sont réalisées simultanément en une même zone de mesure du trajet de production.

Selon une autre caractéristique du procédé réalisé selon les enseignements de l'invention, la mesure de la valeur représentative du facteur de transmission est effectuée en mesurant l'atténuation de l'intensité d'un premier faisceau lumineux monochromatique après son passage à travers au moins une paroi de la préforme, le premier faisceau lumineux présentant une première longueur d'onde prédéterminée et étant émis perpendiculairement à la paroi de la préforme.

Selon une autre caractéristique du procédé réalisé selon les enseignements de l'invention, la première longueur d'onde prédéterminée est comprise dans le domaine des infrarouge proches, par exemple entre 800 et 1600 nm.

Selon une autre caractéristique du procédé réalisé selon les enseignements de l'invention, la mesure de l'épaisseur de la paroi est réalisée au moyen d'un dispositif de mesure confocal qui émet un deuxième faisceau lumineux de spectre continu dans une plage de longueurs d'onde prédéterminée.

Selon une autre caractéristique du procédé réalisé selon les enseignements de l'invention, la mesure de l'épaisseur de la paroi est réalisée par un dispositif de mesure interférométrique qui émet un deuxième faisceau lumineux de spectre continu dans une plage de longueurs d'onde prédéterminée.

Selon une autre caractéristique du procédé réalisé selon les enseignements de l'invention, la première longueur d'onde du premier faisceau lumineux est en dehors de la plage de longueurs d'onde du deuxième faisceau lumineux.

Selon une autre caractéristique du procédé réalisé selon les enseignements de l'invention, le procédé est réitéré pour chaque préforme passant par la ou les zones de mesure.

L'invention concerne aussi une installation pour la mise en œuvre du procédé réalisé selon les enseignements de l'invention, l'installation comportant des moyens de convoyage de préformes en file le long d'un trajet de production prédéterminé passant successivement à travers une zone de chauffage d'un corps des préformes et à travers une station de formage des préformes en récipient, notamment par étirage-soufflage, l'installation comportant :
- un dispositif de mesure d'une valeur représentative du facteur de transmission d'au moins une paroi des préformes lors de leur passage dans une zone de mesure associée ;
- un dispositif de mesure de l'épaisseur de la paroi des préformes leur de leur passage dans une zone de mesure associée.

Selon une autre caractéristique de l'installation selon les enseignements de l'invention, le dispositif de mesure d'une valeur représentative du facteur de transmission comporte une première source lumineuse qui émet un premier faisceau lumineux monochromatique présentant une première longueur d'onde, et le dispositif de mesure de l'épaisseur comporte une deuxième source lumineuse, distincte de la première source lumineuse, qui émet un deuxième faisceau lumineux selon un spectre continu dans une plage de longueurs d'onde prédéterminée.

Selon une autre caractéristique de l'installation selon les enseignements de l'invention, le premier faisceau lumineux et le deuxième faisceau lumineux traversent la paroi de la préforme à la même hauteur.

Selon une autre caractéristique de l'installation selon les enseignements de l'invention, le premier faisceau lumineux et le deuxième faisceau lumineux traversent la paroi de la préforme au même point.

Selon une autre caractéristique de l'installation selon les enseignements de l'invention, la mesure de la valeur représentative du facteur de transmission et la mesure de l'épaisseur sont réalisées successivement en deux zones de mesure distinctes du trajet de production.

Selon une autre caractéristique de l'installation selon les enseignements de l'invention, la mesure de la valeur représentative du facteur de transmission et la mesure de l'épaisseur sont réalisées simultanément en une même zone de mesure du trajet de production.

Selon une autre caractéristique de l'installation selon les enseignements de l'invention, la première source lumineuse et la deuxième source lumineuse sont agencées de part et d'autre du trajet de production de manière à émettre le premier faisceau lumineux et le deuxième faisceau lumineux coaxialement l'un vers l'autre.

Selon une autre caractéristique de l'installation selon les enseignements de l'invention, le dispositif de mesure de l'épaisseur comporte un spectromètre mesurant l'intensité et la longueur d'onde de deux parties du deuxième faisceau lumineux réfléchies respectivement par une face externe et par une face interne de la paroi de la préforme.

Selon une autre caractéristique de l'installation selon les enseignements de l'invention, le dispositif de mesure d'une valeur représentative du facteur de transmission comporte un organe de mesure de l'intensité du premier faisceau lumineux après avoir traversé au moins une paroi de la préforme.

Selon une autre caractéristique de l'installation selon les enseignements de l'invention, l'organe de mesure du dispositif de mesure d'une valeur représentative du facteur de transmission et le spectromètre du dispositif de mesure de l'épaisseur sont formés par un unique spectromètre commun aux deux dispositifs.

Selon une autre caractéristique de l'installation selon les enseignements de l'invention, la première longueur d'onde du premier faisceau lumineux est en dehors de la plage de longueurs d'onde du deuxième faisceau lumineux.

Selon une autre caractéristique de l'installation selon les enseignements de l'invention, le dispositif de mesure de la valeur représentative du facteur de transmission et le dispositif de mesure de l'épaisseur sont agencés le long du trajet de production en amont de la zone de chauffage.

### Brève description des figures

D'autres caractéristiques et avantages de l'invention apparaitront au cours de la lecture de la description détaillée qui va suivre pour la compréhension de laquelle on se reportera aux dessins annexés brièvement décrits ci-après.
La [Fig.1] est une vue de dessus qui représente schématiquement une installation de fabrication de récipients réalisée selon un premier mode de réalisation de l'invention.
La [Fig.2] est une vue de côté qui représente une préforme destinée à être traiter par l'installation de la [Fig.1].
La [Fig.3] est un schéma-bloc qui représente un procédé de mise en œuvre de l'installation de la [Fig.1] pour déterminer une valeur représentative d'un coefficient d'absorption d'une préforme.
La [Fig.4] est un schéma-bloc qui représente une variante de réalisation du premier mode de réalisation du procédé.
La [Fig.5] est une vue en coupe transversale verticale selon le plan de coupe 5-5 de la [Fig.1] qui représente un dispositif de mesure d'un facteur de transmission d'une préforme.
La [Fig.6] est un diagramme qui représente l'intensité d'un faisceau lumineux monochromatique après avoir traversé deux épaisseurs de paroi de la préforme de la [Fig.5].
La [Fig.7] est une vue en coupe transversale verticale selon le plan de coupe 7-7 de la [Fig.1] qui représente un dispositif de mesure confocal pour mesure l'épaisseur d'une paroi d'une préforme.
La [Fig.8] est une vue de détail de la [Fig.7] sur laquelle on a représenté schématiquement les parties réfléchies d'un faisceau lumineux émis par le dispositif de mesure confocal de la [Fig.7].
La [Fig.9] est un diagramme qui représente l'intensité des parties réfléchies du faisceau lumineux émis par le dispositif de mesure confocal de la [Fig.7] en fonction de leur longueur d'onde.
La [Fig.10] est une vue similaire à celle de la [Fig.7] qui représente une variante de réalisation dans laquelle le dispositif de mesure confocal est remplacé par un dispositif de mesure interférométrique.
La [Fig.11] est un diagramme qui représente l'intensité de l'interférence des parties réfléchies du faisceau lumineux émis par le dispositif de mesure interférométrique de la [Fig.7] en fonction de leur longueur d'onde.
La [Fig.12] est un diagramme qui représente la transformée de Fourier de la courbe de la [Fig.11].
La [Fig.13] est un schéma-bloc qui représente un procédé pour déterminer une valeur représentative d'un coefficient d'absorption d'une préforme réalisé selon un deuxième mode de réalisation de l'invention.
La [Fig.14] est une vue de dessus similaire à celle de la [Fig.1] qui représente schématiquement une installation de fabrication de récipients réalisée selon un deuxième mode de réalisation de l'invention qui est apte à mettre en œuvre le procédé de la [Fig.13].
La [Fig.15] est une vue en coupe transversale verticale selon le plan de coupe 15-15 de la [Fig.14] qui représente un dispositif de mesure de l'épaisseur d'une paroi d'une préforme tel que représenté à la [Fig.7] ou à la [Fig.10] combiné avec un dispositif de mesure du facteur de transmission tel que représenté à la [Fig.5].
La [Fig.16] est un diagramme qui représente l'intensité lumineuse des faisceaux transmis et réfléchis par le dispositif de la [Fig.15] en fonction de leur longueur d'onde, lorsque le dispositif de mesure de l'épaisseur est un dispositif de mesure confocal.
La [Fig.17] est un diagramme qui représente l'intensité lumineuse des faisceaux transmis et réfléchis par le dispositif de la [Fig.15] en fonction de leur longueur d'onde, lorsque le dispositif de mesure de l'épaisseur est un dispositif de mesure interférométrique.

### Description détaillée de l'invention

Dans la suite de la description, les termes "haut", "bas", et les termes dérivés "haute", "basse", sont utilisés par souci de clarté en référence à l'orientation des figures sans que ceci n'ait une quelconque portée limitative.

Dans la suite de la description, les longueurs d'onde des rayonnements lumineux seront exprimées en nanomètre, indiqué par l'abréviation « nm ».

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, par exemple de quelques dizaines de nanomètres, centrée sur une fréquence principale où l'intensité du rayonnement est maximale.

Dans la suite de la description, on considère comme monochromatique une telle source réelle.

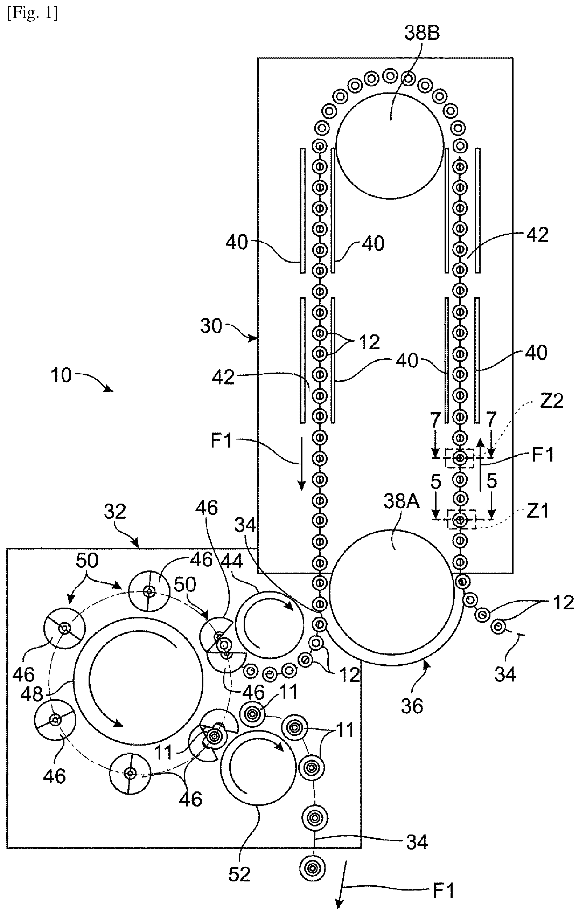

Sur la [Fig.1] est illustrée schématiquement une installation 10 pour la fabrication de récipients 11 à partir de préformes 12 en matière thermoplastique et plus particulièrement en PET (polyéthylène téréphtalate) ou en rPET (polyéthylène téréphtalate recyclé). Le matériau thermoplastique peut éventuellement contenir, mais pas obligatoirement, des additifs qui augmentent artificiellement le facteur d'absorption de la préforme.

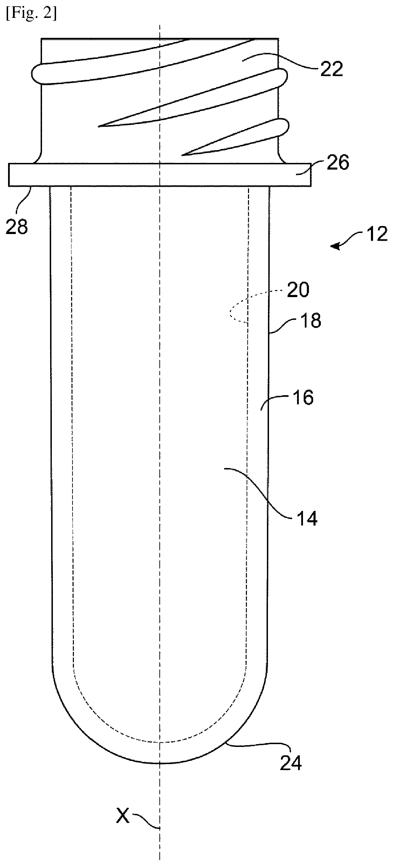

Comme représenté à la [Fig.2], chaque préforme 12 comporte un corps 14 cylindrique d'axe « X ». Le corps 14 comporte une paroi 16 latérale transparente qui délimite un volume intérieur. La paroi 16 présente une forme de révolution autour de l'axe « X » de sorte qu'à une hauteur donnée, la paroi 16 présente une épaisseur constante. Cependant, l'épaisseur de la paroi 16 est susceptible de varier en fonction de la hauteur. La paroi 16 est délimitée par une face 18 externe qui est tournée vers l'extérieur de la préforme 12 et par une face 20 interne qui est tournée vers le volume intérieur.

Une extrémité supérieure du corps 14 débouche par un col 22. Le col 22 présente la forme définitive de celui du récipient 11 à obtenir. De ce fait, le col 22 ne subit pas la moindre déformation pendant la fabrication du récipient 11. Le corps 14 comporte un fond 24 qui ferme son extrémité inférieure et dont la forme est généralement hémisphérique. Le col 22 comporte une collerette 26 agencée à sa jonction avec le corps 14. La face inférieure de la collerette 26 est destinée à former une surface 28 d'appui pour permettre de soutenir la préforme 12 pendant son moulage et/ou pendant son transport.

A la fin de leur moulage par injection, les préformes 12 sont refroidies brutalement pour conférer au matériau thermoplastique un état amorphe. Il est ainsi possible de rendre le matériau thermoplastique à nouveau malléable par chauffage au-delà d'une température de transition vitreuse.

En se reportant à nouveau à la [Fig.1], l'installation 10 de fabrication comprend une station 30 de chauffage et une station 32 de formage. Les préformes 12 se déplacent en file le long d'un trajet 34 de production qui passe à travers la station 30 de chauffage et la station 32 de formage. Le sens de déplacement des préformes 12 est indiqué par les flèches « F1 » de la [Fig.1]. Lors du fonctionnement normal de l'installation 10 de fabrication, les préformes 12 sont en déplacement constant le long du trajet 34 de production.

L'installation 10 de fabrication comporte généralement un dispositif (non représenté) d'alimentation en préformes 12 redressées et alignées en une file.

Le trajet 34 de production commence à partir du moment où les préformes 12 sont redressées et alignées en une file. Les préformes 12 peuvent notamment être prises en charge individuellement par un convoyeur ou être reçues les unes contre les autres en file entre des rails de guidage comme c'est le cas pour les préformes 12 avant qu'elles n'atteignent la station 30 de chauffage.

La station 30 de chauffage a pour fonction de chauffer le corps 14 des préformes 12 à une température supérieure ou égale à la transition vitreuse du matériau constitutif, par exemple supérieure à 70°C lorsque ce matériau est du PET. La station 30 de chauffage comprend un convoyeur 36 (illustré schématiquement) pour transporter les préformes 12 en les faisant tourner sur elles-mêmes.

Le convoyeur 36 comporte généralement des mandrins (non représentés) qui sont emboîtés avec le col 22 pour transporter les préformes 12. Les mandrins se déplacent le long d'un circuit fermé. Les mandrins sont par exemple portés par les maillons d'une chaîne ou encore par des navettes indépendantes se déplaçant le long d'un rail.

Le circuit comporte ici deux tronçons rectilignes parallèles reliés par des tronçons de virage à 180°. Le convoyeur 36 comporte en outre deux roues 38A, 38B de guidage des mandrins dans les portions de virage du circuit fermé.

La station 30 de chauffage comporte aussi des moyens 40 de chauffage pour chauffer les préformes 12. Il s'agit par exemple de lampes faisant face à des réflecteurs ou de sources laser qui émettent un rayonnement électromagnétique chauffant dans le domaine des infrarouges proches qui est compris dans une plage de longueurs d'ondes comprises entre 780 nm et 3000 nm. L'intensité du rayonnement électromagnétique chauffant est notamment plus élevé dans une plage de longueurs d'ondes de plus forte intensité comprise entre 800 nm et 1600 nm.

Les moyens 40 de chauffage sont agencés le long d'une zone 42 de chauffage du trajet 34 de production des préformes. Dans l'exemple représenté à la [Fig.1], la station 30 de chauffage comporte une zone 42 de chauffage divisée en deux parties agencées en amont et en aval de la portion de virage guidée par la roue 38B de guidage.

Les préformes 12 entrant dans la station 30 de chauffage sont prises en charge individuellement par le convoyeur 36 sur lequel elles effectuent un tronçon en forme de U de leur trajet 34 de production passant à travers la zone 42 de chauffage. Elles sont chauffées au défilé par les moyens 40 de chauffage, lesquels, le cas échéant, sont placés d'un côté ou de part et d'autre des préformes 12 par rapport à leur sens de défilement. Les préformes 12 chaudes sont extraites de la station 30 de chauffage après leur passage dans la zone 42 de chauffage et transférées dans des moules de la station 32 de formage par un premier dispositif 44 de transfert, tel qu'une roue de transfert, interposé entre la station 30 de chauffage et la station 32 de formage.

La roue de transfert comprend des bras (non représentés, car connus en soi) qui viennent saisir successivement les préformes 12, à leur sortie de la station 30 de chauffage, au niveau de leur col 22, pour les introduire chacune à leur tour dans un moule 46 de la station 32 de formage. La station 32 de formage comprend un carrousel 48 tournant à la périphérie duquel sont disposés plusieurs postes 50 de soufflage.

Chaque poste 50 de soufflage comprend au moins un moule 46 qui définit une cavité présentant l'empreinte du récipient 11. Chaque poste 50 de soufflage comporte des moyens (non représentés) pour former déformer le corps 14 de la préforme 12 et le plaquer contre l'empreinte du moule 46, par exemple par étirage-soufflage.

Chaque préforme 12 chaude sortant de la station 30 de chauffage est introduite dans un moule 46 du poste 50 de soufflage pour y être soufflée et transformée en récipient 11. Une fois achevé, le récipient 11 est extrait du poste 50 de soufflage par un second dispositif 52 de transfert, similaire au premier dispositif 44 de transfert.

Pour permettre d'analyser automatiquement et rapidement la qualité des préformes 12, l'invention propose un procédé de détermination d'une valeur représentative du coefficient d'absorption « a » du matériau thermoplastique constituant une préforme 12 qui soit indépendante de l'épaisseur « s » de la paroi 16. Ce procédé est mis en œuvre lorsque la préforme 12 se déplace le long du trajet 34 de production dans l'installation 10 de fabrication de récipients 11. De préférence, la préforme 12 est en déplacement constant lors de la mise en œuvre du procédé.

Dans les exemples représentés aux figures, le procédé est mis en œuvre lorsque les préformes 12 sont transportées par le convoyeur 36 de la station 30 de chauffage. Ce convoyeur 36 transporte les préformes 12 à travers à la zone 42 de chauffage.

Le procédé est de préférence mis en œuvre sur les préformes 12 avant leur chauffage, donc en amont de la zone 42 de chauffage. Cependant, il peut aussi être mis en œuvre sur des préformes 12 déjà chaude en aval de la zone 42 de chauffage.

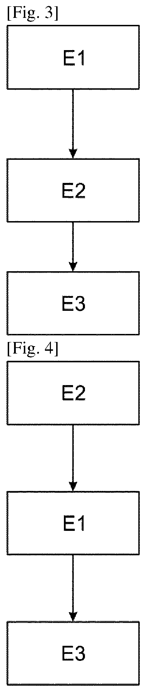

Comme représenté à la [Fig.3], le procédé comporte une première étape « E1 » de mesure d'une valeur représentative du facteur de transmission « T » d'un rayonnement infrarouge à travers au moins une paroi 16 de la préforme 12 pendant son déplacement le long du trajet 34 de production.

Le procédé comporte en outre une deuxième étape « E2 » de mesure de l'épaisseur « s » de ladite paroi 16 de ladite préforme 12 pendant son déplacement le long du trajet 34 de production.

Le procédé comporte ensuite une troisième étape « E3 » de calcul de la valeur représentative du coefficient d'absorption « α » du matériau thermoplastique indépendante de l'épaisseur « s » de la préforme 12 à partir de la mesure du facteur de transmission « T » et de l'épaisseur « s » effectué lors des deux premières étapes « E1, E2 ». Cette troisième étape « E3 » de calcul intervient donc bien entendu après les deux premières étapes « E1, E2 ».

Lors de cette troisième étape « E3 » de calcul, la valeur représentative du coefficient d'absorption « α » est calculée à partir de la formule de Beer-Lambert suivante :$T = e \left(-α.2.s\right)$

dans laquelle « T » représente le facteur de transmission, « α » représente le coefficient d'absorption du matériau thermoplastique et « s » représente l'épaisseur de la paroi 16. Comme cela sera expliqué par la suite, étant donné que le facteur de transmission « T » est mesuré par un faisceau lumineux transversant deux fois la paroi 16, l'épaisseur « s » est ici multipliée par deux.

En variante, lorsque le facteur de transmission est mesuré à travers une seule épaisseur de la paroi 16, le facteur « 2 » devant l'épaisseur « s » est supprimé de toutes les formules.

L'invention propose ici d'utiliser un facteur de transmission « Tn » normalisé en tant que valeur représentative du coefficient d'absorption « α ». Un tel facteur de transmission « Tn » normalisé représente le facteur de transmission qui serait mesuré pour une paroi d'épaisseur « sn » prédéterminée « sn » réalisée dans le même matériau que la préforme 12. L'épaisseur « sn » prédéterminée est par exemple égale à 4 mm. Ainsi, en calculant ce facteur de transmission « Tn » normalisé, il est possible de comparer les propriétés d'absorption du matériau constituant plusieurs préformes d'épaisseurs réelles différentes. Ce facteur de transmission « Tn » normalisé est calculé en utilisant la formule suivante dérivée de la formule de Beer-Lambert : $Tn = {T}^{\frac{sn}{2 s}}$

dans laquelle « Tn » représente le facteur de transmission normalisé, « T » représente le facteur de transmission mesuré lors de la première étape « E1 », « sn » représente l'épaisseur prédéterminée, « s » représente l'épaisseur mesurée lors de la deuxième étape « E2 ».

En variante, la valeur représentative du coefficient d'absorption « α » est directement formée par le coefficient d'absorption « α ». Dans ce cas, le coefficient d'absorption « α » est calculé en appliquant la formule suivante dérivée de la formule de Beer-Lambert : $α = - \frac{1}{2 s} ln T$

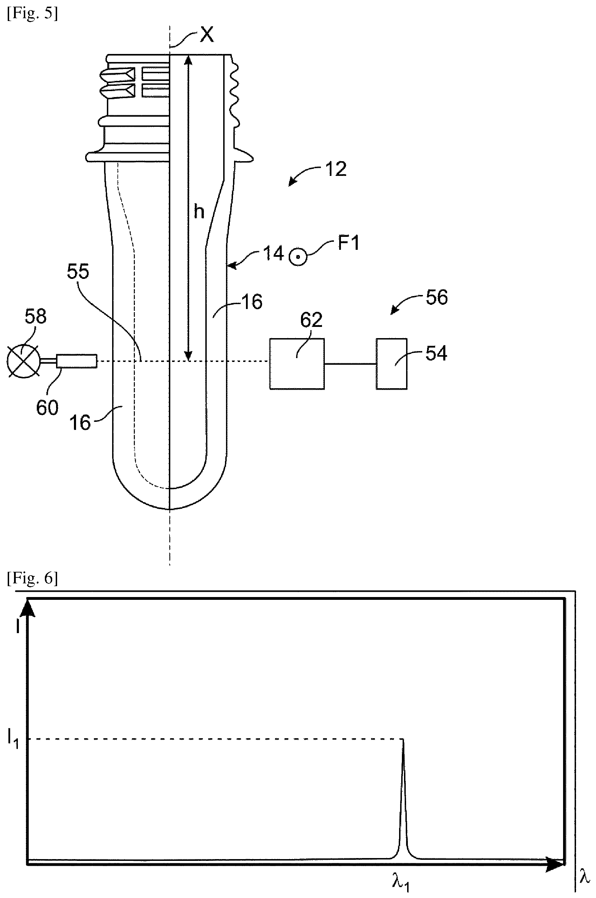

L'étape « E3 » de calcul est ici mise en œuvre automatiquement par une unité 54 électronique de commande, visible notamment aux figures 5, 7, 9 et 12.

La première étape « E1 » de mesure de la valeur représentative du facteur de transmission « T » et la deuxième étape « E2 » de mesure de l'épaisseur sont réalisées à la même hauteur « h » de la paroi 16 de la préforme 12. La hauteur « h » est ici déterminée à partir d'un point de référence tel que l'extrémité libre du col 22, comme c'est ici le cas, ou la surface 28 d'appui de la collerette 26. La paroi 16 présentant une forme de révolution autour de l'axe « X », cela permet de garantir que le facteur de transmission « T » est mesuré sur une portion de paroi 16 dont l'épaisseur correspond à l'épaisseur « s » mesurée lors de la deuxième étape « E2 » de mesure de l'épaisseur.

De préférence, l'épaisseur « s » et le facteur de transmission « T » sont mesurés au même point de la paroi 16 pour que la valeur représentative du coefficient d'absorption « α » soit aussi précise que possible.

Selon un premier mode de réalisation de l'invention représenté à la [Fig.1], la mesure de la valeur représentative de la transmittance « T » et la mesure de l'épaisseur « s » sont réalisées successivement en une première zone « Z1 » de mesure et une deuxième zone « Z2 » de mesure distincte du trajet 34 de production.

La première étape « E1 » de mesure de la valeur représentative du facteur de transmission « T » et la deuxième étape « E2 » de mesure de l'épaisseur « s » sont ainsi réalisées successivement. Par exemple, la première étape « E1 » est réalisée avant la deuxième étape « E2 », comme représenté à la [Fig.3].

En variante, la deuxième étape « E2 » est réalisée avant la première étape « E1 », comme représenté à la [Fig.4].

La première étape « E1 » de mesure du facteur de transmission « T » est ici effectuée en mesurant l'atténuation de l'intensité « I » d'un premier faisceau 55 lumineux monochromatique qui présente une première longueur d'onde « λ1 » prédéterminée. La première longueur d'onde « λ1 » prédéterminée est comprise dans le domaine des infrarouges proches. Elle appartient de préférence à la plage de longueurs d'ondes de plus forte intensité du rayonnement électromagnétique chauffant, ici comprise entre 800 nm et 1600 nm.

A cet effet, l'installation 10 comporte un dispositif 56 de mesure du facteur de transmission « T ». Comme représenté à la [Fig.5], ce dispositif 56 est agencé pour mesurer le facteur de transmission « T » d'un préforme 12 passant dans la première zone « Z1 » de mesure.

Le dispositif 56 de mesure du facteur de transmission « T » comporte une première source 58 lumineuse qui émet le premier faisceau 55 lumineux monochromatique présentant la première longueur d'onde « λ1 ».

La première source 58 lumineuse comporte par exemple une diode électroluminescente (LED), une diode superluminescente (SLED) ou une lampe. Le premier faisceau 55 lumineux monochromatique est émis perpendiculairement à la paroi 16 de la préforme 12. Le premier faisceau 55 lumineux est émis de manière à traverser la préforme 12 en passant par son axe « X » principal.

Le premier faisceau 55 lumineux est plus particulièrement émis selon un axe qui est perpendiculaire à une tangente au trajet 34 de production de la préforme 12 dans la première zone « Z1 » de mesure.

Le premier faisceau 55 lumineux traverse la paroi 16 à ladite hauteur « h ».

Le premier faisceau 55 lumineux peut être guidé dans la bonne direction par un moyen de guidage optique tel qu'une fibre optique 60.

Le dispositif 56 de mesure du facteur de transmission « T » comporte en outre un organe 62 de mesure de l'intensité « I » du premier faisceau 55 lumineux après avoir traversé au moins une fois la paroi 16 du corps 14 de la préforme 12.

L'organe 62 de mesure de l'intensité « I » est ici agencé de manière à mesurer l'intensité « I » du premier faisceau 55 lumineux de l'autre côté de la préforme 12 par rapport à l'axe « X » de la préforme 12 après qu'il ait traversé deux fois la paroi 16 en deux points diamétralement opposés, à la même hauteur « h » de la préforme 12.

Dans cette configuration, il est préférable de choisir la première longueur d'onde « λ1 » prédéterminée dans une plage de longueurs d'ondes pour lesquelles le matériau thermoplastique est suffisamment transparent afin que l'intensité « I » du premier faisceau 55 lumineux après avoir traversé deux fois la paroi 16 puisse être mesurée avec suffisamment de précision et de certitude par l'organe de mesure. En effet, l'intensité « I » du premier faisceau 55 lumineux risquerait d'être trop atténuée après deux passages à travers la paroi 16 s'il était émis à une longueur d'onde facilement absorbée par le matériau thermoplastique.

Par exemple, dans le cas d'un matériau plastique réalisé en PET ou en rPET, la première longueur d'onde « λ1 » est comprise dans les plages comprises entre 800 nm et 1100 nm, ou entre 1250 nm et 1300 nm. La première longueur d'onde « λ1 » est par exemple choisie parmi les valeurs suivantes : 850 nm, 860 nm, 880 nm, 940 nm, 950 nm, 960 nm, 980 nm, 1050 nm ou 1300 nm.

En variante non représentée de l'invention, l'organe de mesure de l'intensité est agencé de manière à mesurer l'intensité du premier faisceau lumineux après qu'il ait traversé une seule fois la paroi de la préforme. Dans ce cas, l'organe de mesure comporte un organe d'interception du faisceau lumineux qui est introduit dans la préforme lors de la première étape, l'organe d'interception guidant le faisceau lumineux intercepté jusqu'à un organe de mesure de l'intensité.

L'organe 62 de mesure de l'intensité est par exemple un spectromètre qui permet aussi de mesurer la longueur d'onde du premier faisceau 55 lumineux monochromatique pour réduire les risques d'erreur de mesure dues à des rayonnements parasites.

L'organe 62 de mesure permet ainsi d'obtenir la mesure représentée à la [Fig.6].

L'intensité « I0 » lumineuse d'émission à laquelle le premier faisceau 55 lumineux est émis est une donnée connue. L'intensité « I0 » lumineuse à laquelle le premier faisceau 55 lumineux est émis peut aussi être mesurée directement par l'organe 62 de mesure lorsqu'aucune préforme 12 ne passe dans la première zone « Z1 » de mesure.

Après avoir traversé deux fois la paroi 16 de la préforme 12, l'intensité lumineuse du premier faisceau 55 lumineux est atténuée. Le premier faisceau 55 lumineux présente alors une intensité lumineuse dite « intensité « I1 » lumineuse transmise ».

Ainsi, il est aisé d'en déduire le facteur de transmission « T » en fonction du rapport entre l'intensité « I0 » lumineuse d'émission et l'intensité « I1 » lumineuse transmise.

Pour calculer plus précisément le facteur de transmission « T », il est possible, mais pas obligatoire, de pondérer ce ratio en prenant en compte la quantité du premier faisceau 55 lumineux qui est réfléchie à chaque entrée dans une paroi 16. Cette quantité réfléchie est calculée en fonction du facteur de réflectance « R » qui est une quantité connue préalablement.

Le facteur de pondération pour le passage du premier faisceau 55 lumineux à travers une épaisseur de paroi 16 est calculé selon l'équation suivante : ${f}_{1} = \frac{{\left(1-R\right)}^{2}}{1 - {R}^{2}}$

Le facteur de pondération pour le passage du premier faisceau 55 lumineux à travers deux épaisseurs de paroi 16 est calculé selon l'équation suivante : ${f}_{2} = \frac{{f}_{1}}{\left(2-{f}_{1}\right)}$

Le facteur de transmission « T » lors du passage à travers deux épaisseurs de paroi 16 est ainsi calculé par application de l'équation suivante :
$T = \frac{{I}_{1}}{{I}_{0}} . {f}_{2}$

Le facteur de transmission « T » est calculé par l'unité 54 électronique de commande qui reçoit les mesures effectuées par l'organe 62 de mesure.

La deuxième étape « E2 » de mesure de l'épaisseur « s » est ici réalisée sans contact en utilisant un dispositif 64 de mesure de l'épaisseur qui est un dispositif de mesure optique. Comme représenté à la [Fig.1], ce dispositif 64 de mesure de l'épaisseur est agencé pour mesurer l'épaisseur « s » de la paroi 16 d'une préforme 12 passant dans la deuxième zone « Z2 » de mesure.

Le dispositif 64 de mesure de l'épaisseur comporte une deuxième source 66 lumineuse, distincte de la première source 58 lumineuse, qui émet un deuxième faisceau 68 lumineux selon un spectre continu dans une plage de longueurs d'ondes « λ2 » prédéterminée. Cette plage de longueurs d'onde est délimitée par une borne inférieure « λ2-min » et par une borne supérieure « λ2-max ».

L'épaisseur « s » est ensuite déterminée en analysant une première partie du deuxième faisceau 68 lumineux réfléchie par la face 18 externe et une deuxième partie du deuxième faisceau 68 lumineux réfléchie par la face 20 interne de la paroi 16.

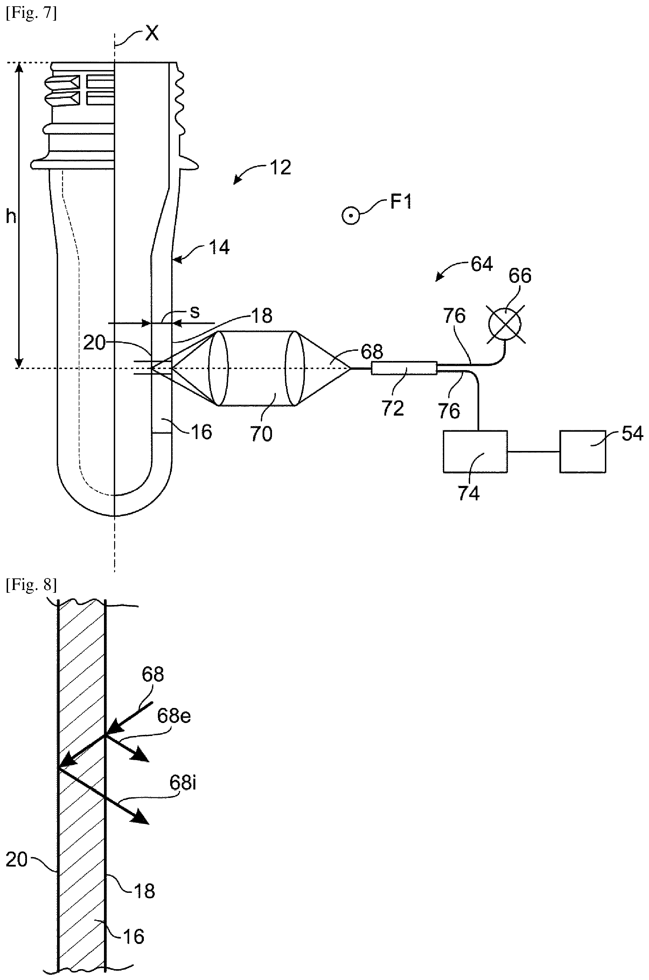

Comme représenté à la [Fig.7], la mesure de l'épaisseur « s » de la paroi est par exemple réalisée au moyen d'un dispositif 64 de mesure de l'épaisseur confocal comportant la deuxième source 66 lumineuse émettant le deuxième faisceau 68 lumineux à spectre continu.

La deuxième source 66 lumineuse comporte par exemple une diode électroluminescente (LED), une diode superluminescente (SLED) ou une lampe. Le deuxième faisceau 68 lumineux à spectre continu est émis perpendiculairement à la paroi 16 de la préforme 12. Le deuxième faisceau 68 lumineux est émis de manière à traverser la paroi 16 en passant par son axe « X » principal.

Le deuxième faisceau 68 lumineux est plus particulièrement émis selon un axe perpendiculaire à une tangente à la trajectoire de la préforme 12 dans la deuxième zone « Z2 » de mesure.

Le deuxième faisceau 68 lumineux traverse la paroi 16 à ladite hauteur « h ».

La plage de longueurs d'ondes « λ2 » du spectre du deuxième faisceau 68 lumineux s'étend par exemple dans le domaine du visible, c'est-à-dire que la borne inférieure « λ2-min » est environ égale à 380 nm et la borne supérieure « λ2-max » est environ égale à 780 nm.

La deuxième source 66 lumineuse comporte un organe 70 de décomposition du spectre continu dont chaque composante est focalisée dans un plan orthogonal à l'axe « X » principal de la préforme 12 et à une distance déterminée de l'organe 70 de décomposition en fonction de sa longueur d'onde. Ainsi, chaque longueur d'onde est focalisée à une distance axiale déterminée depuis l'organe 70 de décomposition. Le deuxième faisceau 68 lumineux ainsi décomposé traverse la paroi 16 du récipient 68.

Comme cela est représenté à la [Fig.8], de manière connue, la face 18 externe et la face interne 20 de la paroi 16 de la préforme 12 réfléchissent respectivement une première partie 68e et une deuxième partie 68i du deuxième faisceau 68 lumineux ainsi décomposé.

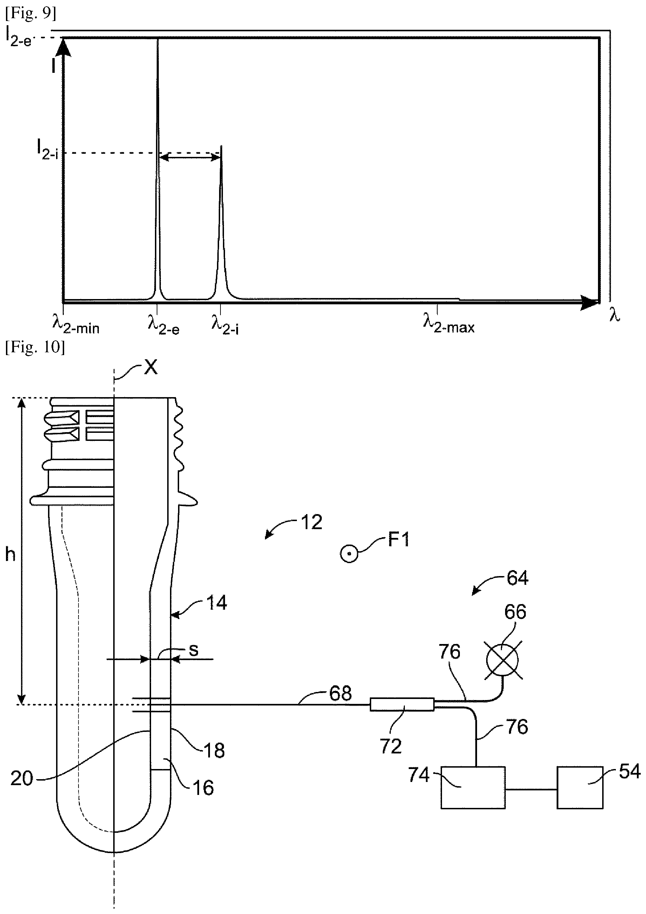

Chacune desdites parties 68e, 68i est identifiable par un pic d'intensité « I2-i, I2-e » à une longueur d'onde déterminée « λ2-i, λ2-e », comme cela est représenté à la [Fig.9]. Chaque longueur d'onde déterminée « λ2-i, λ2-e » correspond à la longueur d'onde de la composante du deuxième faisceau lumineux 68 qui est focalisée respectivement sur la face 18 externe et la face interne 20 de la paroi 16.

Le dispositif 64 de mesure de l'épaisseur comporte en outre un organe 72 de séparation de faisceaux lumineux qui est interposé sur le trajet du deuxième faisceau 68 lumineux. L'organe 72 de séparation permet de laisser passer le deuxième faisceau lumineux en direction de la préforme 12 sans le dévier, tandis qu'il redirige les parties 68e, 68i réfléchies du deuxième faisceau 68 lumineux réfléchis en direction d'un spectromètre 74 qui mesure l'intensité « I » et la longueur d'onde « λ » des parties 68e, 68i réfléchies du deuxième faisceau 68 lumineux.

L'organe 72 de séparation peut être formé par un coupleur optique, comme c'est ici le cas, ou par un miroir semi-réfléchissant.

Le deuxième faisceau lumineux 68 et/ou les parties 68e, 68i réfléchies peuvent être guidées par des moyens de guidage tels que des fibres 76 optiques.

Chaque partie 68e, 68i réfléchie du deuxième faisceau 68 lumineux est sensiblement monochromatique. Ainsi, la première longueur d'onde « λ2-e » représentée à la [Fig.9] correspond à la partie 68e de deuxième faisceau 68 lumineux réfléchie par la face 18 externe de la paroi 16, tandis que la deuxième longueur d'onde « λ2-i » représentée à la [Fig.8] correspond à la partie 68i de deuxième faisceau 68 lumineux réfléchie par la face 20 interne de la paroi 16. Cela est facilement identifiable par l'intensité lumineuse de chaque pic. En effet, le partie 68e réfléchie par la face 18 externe n'a pas traversé la paroi et n'a donc pas été atténuée, tandis que la partie 68i réfléchie par la face 20 interne a été atténuée par son aller-retour dans la paroi 16.

En fonction des longueurs d'onde « λ2-i, λ2-e » réfléchies et de l'indice « n » de réfraction du matériau constituant la paroi 16, l'unité 54 électronique de commande calcule l'épaisseur « s » de la paroi 16.

En variante de l'invention représentée à la [Fig.10], la mesure de l'épaisseur « s » de la paroi 16 est réalisée par un dispositif 64 de mesure de l'épaisseur interférométrique.

Un tel dispositif 64 de mesure de l'épaisseur comporte une deuxième source 66 lumineuse qui émet un deuxième faisceau 68 lumineux de spectre continu dans une plage de longueurs d'onde « λ2 » prédéterminée perpendiculairement à la paroi 16 de la préforme 12. Le deuxième faisceau 68 lumineux à spectre continu est émis perpendiculairement à la paroi 16 de la préforme 12. Le deuxième faisceau 68 lumineux est émis de manière à traverser la paroi 16 en passant par son axe « X » principal.

Le deuxième faisceau 68 lumineux est plus particulièrement émis selon un axe perpendiculaire à une tangente à la trajectoire de la préforme 12 dans la deuxième zone « Z2 » de mesure.

Le deuxième faisceau 68 lumineux traverse la paroi 16 à ladite hauteur « h ».

La deuxième source 66 lumineuse comporte par exemple une diode électroluminescente (LED), une diode superluminescente (SLED) ou une lampe.

Le spectre du deuxième faisceau 68 lumineux est choisi pour qu'il puisse traverser la paroi 16 du récipient 12.

La plage de longueurs d'ondes « λ2 » du spectre du deuxième faisceau 68 lumineux s'étend par exemple dans le domaine de l'infrarouge proche, par exemple la borne inférieure « λ2-min » est environ égale à 1530 nm et la borne supérieure « λ2-max » est environ égale à 1570 nm.

Contrairement au dispositif de mesure confocal, le rayonnement n'est pas ici décomposé.

Lorsque le deuxième faisceau 68 lumineux traverse la face 18 externe de la paroi 16 du récipient 12, une première partie 68e du deuxième faisceau 68 lumineux est réfléchie par la face 18 externe. Cette première partie 68e réfléchie présente un spectre continu. Elle se propage ainsi dans l'axe du deuxième faisceau 68 lumineux mais dans un sens inverse.

De ce fait, le deuxième faisceau 68 lumineux perd ainsi en intensité "I" en poursuivant sa course à travers la paroi 16. Le spectre de la première partie 68e réfléchie est identique au spectre du deuxième faisceau 68 lumineux, seule l'intensité "I" de la première partie 68e réfléchie est inférieure à celle du deuxième faisceau 68 lumineux.

Le deuxième faisceau 68 lumineux continu de se propager à l'intérieur de la paroi 16 du récipient 12 jusqu'à atteindre la face 20 interne de la paroi 16. Une deuxième partie 68i du deuxième faisceau 68 lumineux est réfléchie par la face 20 interne. Cette deuxième partie 68i réfléchie présente un spectre continu. Elle se propage ainsi dans l'axe du deuxième faisceau 68 lumineux, mais dans un sens inverse. Le spectre de la deuxième partie 68i réfléchie est identique à celui du deuxième faisceau 68 lumineux.

Le dispositif 64 de mesure de l'épaisseur comporte en outre un organe 72 de séparation de faisceaux lumineux qui est interposé sur le trajet du deuxième faisceau 68 lumineux. L'organe 72 de séparation permet de laisser passer le deuxième faisceau 68 lumineux en direction de la préforme 12 sans le dévier, tandis qu'il redirige les parties 68e, 68i réfléchies du deuxième faisceau 68 lumineux réfléchis en direction d'un spectromètre 74 qui mesure l'intensité « I » et la longueur d'onde « λ » des parties 68e, 68i réfléchies du deuxième faisceau 68 lumineux.

L'organe 72 de séparation peut être formé par un coupleur optique, comme c'est ici le cas, ou par un miroir semi-réfléchissant.

Le deuxième faisceau lumineux 68 et/ou les parties 68e, 68i réfléchies peuvent être guidées par des moyens de guidage tels que des fibres 76 optiques.

Le spectromètre 74 communique avec l'unité 54 électronique de commande.

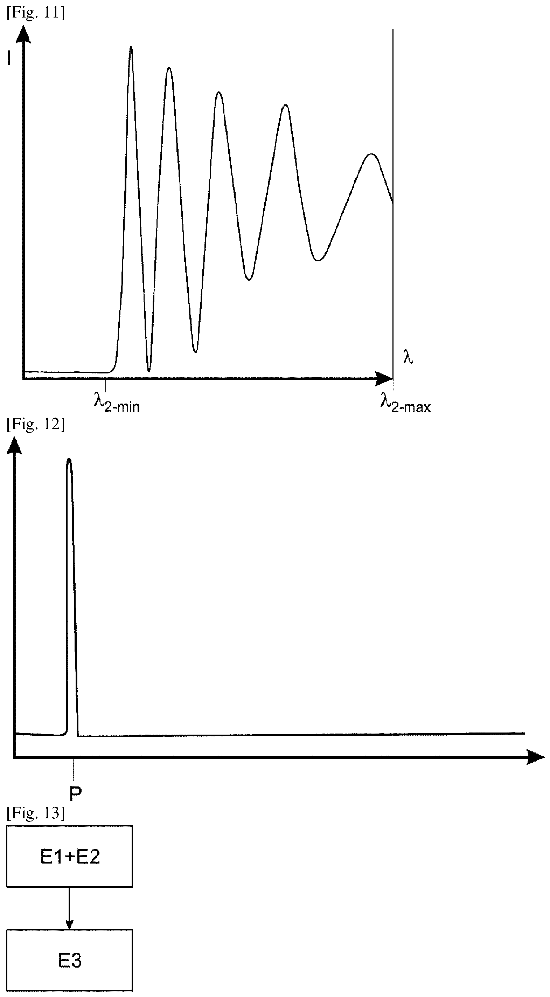

La première partie 68e réfléchie et la deuxième partie 68i réfléchie du deuxième faisceau 68 lumineux revenant de la paroi 16 interfèrent l'une avec l'autre d'une manière qui est généralement connue. Il en résulte une interférence constructive ou destructive en fonction de la différence de longueur de trajet de chacune desdites parties 68e, 68i réfléchies causée par l'épaisseur « s » de la paroi 16, comme cela est représenté à la [Fig.11].

Les interférences produites par la superposition des première et deuxième parties 68e, 68i réfléchies sont analysées par le spectromètre 74 et/ou par l'unité 54 électronique de commande.

La première partie 68e réfléchie et la deuxième partie 68i réfléchie présentent des spectres d'onde identiques mais décalés axialement d'une distance qui est égale à l'épaisseur "s" de la paroi 16 du récipient 12.

De manière connue, selon l'épaisseur traversée, l'intensité "I" de certaines longueurs d'onde de la superposition des parties 68e, 68i réfléchies sera réduite tandis que l'intensité "I" d'autres longueurs d'ondes de ladite superposition sera augmentée.

Ainsi, les longueurs d'onde « *λa* « qui vérifient l'équation suivante, présentent notamment une intensité "I" maximale :
$s \times n = \frac{λa}{2} \times x$
dans laquelle "s" représente l'épaisseur de la paroi 16, "n" représente l'indice de réfraction du matériau constituant la paroi 16 et "x" est un nombre entier quelconque.

En effet, les intensités "I" de la première partie 68e réfléchie et de la deuxième partie 68i réfléchie s'additionnent pour augmenter l'intensité "I" du rayon pour ladite longueur d'onde « *λa* «.

En revanche, les longueurs d'onde « *λb* « qui vérifient l'équation suivante, présentent une intensité "I" minimale :
$s \times n = \frac{λb}{2} \times \left(x+0,5\right)$
dans laquelle "s" représente l'épaisseur de la paroi 16, "n" représente l'indice de réfraction du matériau constituant la paroi 16 et "x" est un nombre entier quelconque.

En effet, les intensités "I" de la première partie 68e réfléchie et de la deuxième partie 68i réfléchie se soustraient pour diminuer l'intensité "I" du rayon pour ladite longueur d'onde « *λb* «.

Les interférences se traduisent ainsi par un phénomène de battement. Le phénomène de battement est une variation périodique de l'intensité "I" lumineuse de la superposition des deux parties 68e, 68i réfléchies en fonction de la fréquence "1/λ" de l'onde lumineuse, comme cela est illustré à la [Fig.10].

Par une transformée de Fourier, opération bien connue de l'homme du métier, il est aisé de retrouver la période "P" de cette variation périodique, comme représenté à la [Fig.12]. Cette période "P" est proportionnelle à l'épaisseur optique qui est égale au produit de l'épaisseur "s" de la paroi 16 du récipient 12 par l'indice de réfraction "n" du matériau constituant ladite paroi 16. Il est ainsi possible de retrouver l'épaisseur "s" de la paroi 16 du récipient 12 en connaissant l'indice de réfraction "n" du matériau ou en étalonnant la mesure sur une paroi de test dont l'épaisseur a été mesurée par d'autres moyens connus.

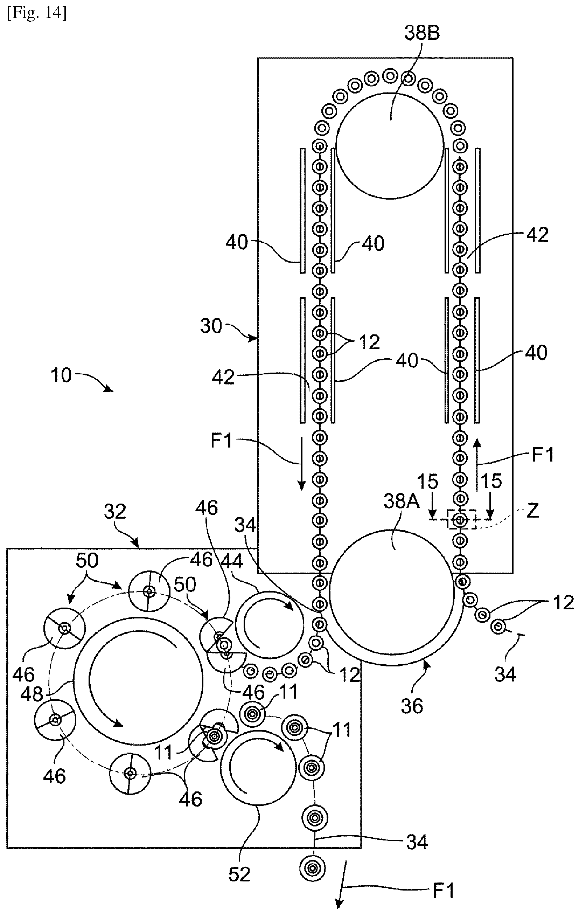

Selon un deuxième mode de réalisation de l'invention représenté à la [Fig.13], l'étape « E1 » de mesure de la valeur représentative du facteur de transmission « T » et l'étape « E2 » de mesure de l'épaisseur « s » sont réalisées simultanément. Dans ce cas, la mesure du facteur de transmission « T » et la mesure de l'épaisseur « s » sont réalisées simultanément en une zone « Z » commune de mesure du trajet 34 de production, comme représenté à la [Fig.14].

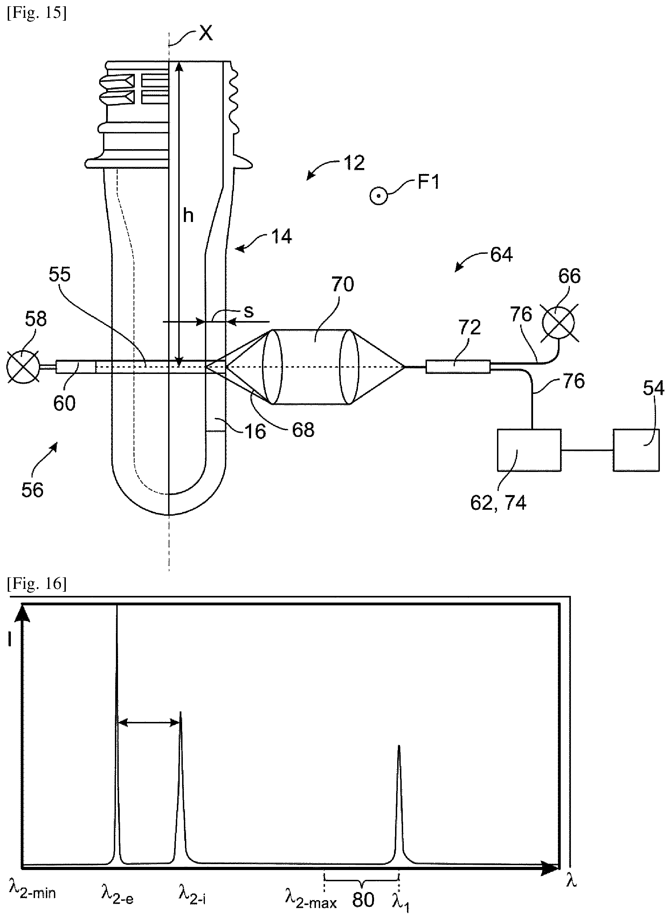

Pour ce faire, le dispositif 56 de mesure du facteur de transmission et le dispositif 64 de mesure de l'épaisseur sont ici agencé dans la zone « Z » commune de mesure, comme représenté à la [Fig.15].

Le dispositif 56 de mesure du facteur de transmission fonctionne de manière analogue à ce qui a été décrit dans le premier mode de réalisation et il comporte sensiblement la même structure. Seules les différences de structure et de fonctionnement seront décrites par la suite.

De même, le dispositif 64 de mesure de l'épaisseur fonctionne de manière analogue à ce qui a été décrit dans le premier mode de réalisation et il comporte sensiblement la même structure. Comme dans le premier mode de réalisation, il peut s'agir d'un dispositif de mesure confocal ou d'un dispositif de mesure interférométrique. Seules les différences de structure et de fonctionnement seront décrites par la suite.

On a représenté à la [Fig.15] un exemple de réalisation dans lequel le dispositif 64 de mesure de l'épaisseur est un dispositif de mesure confocal comportant un organe 70 de décomposition du deuxième faisceau 68 lumineux.

En variante non représentée, le dispositif de mesure de l'épaisseur est un dispositif de mesure interférométrique présentant une structure identique à ce qui est représenté à la [Fig.15], à l'exception de l'organe de décomposition qui peut être supprimé.

La première source 58 lumineuse et la deuxième 66 source lumineuse émettent respectivement le premier faisceau 55 lumineux et le deuxième faisceau 68 lumineux vers la zone « Z » commune de mesure du trajet 34 de production pour toucher simultanément la préforme 12 passant par ladite zone « Z » de mesure.

Le premier faisceau 55 lumineux et le deuxième faisceau 68 lumineux sont émis coaxialement. La première source 58 lumineuse et la deuxième source 68 lumineuse sont agencées de part et d'autre du trajet 34 de production de manière que le premier faisceau 55 lumineux pénètre dans le corps 14 de la préforme par un côté, tandis que le deuxième faisceau 68 lumineux pénètre dans la préforme 12 par un côté diamétralement opposé.

Le premier faisceau 55 lumineux et le deuxième faisceau 68 lumineux sont émis perpendiculairement à la paroi 16 de la préforme 12 de manière à traverser la paroi 16 en passant par son axe « X » principal.

Le premier faisceau 55 lumineux et le deuxième faisceau 68 lumineux sont plus particulièrement émis selon un axe perpendiculaire à une tangente à la trajectoire de la préforme 12 dans la zone « Z » commune de mesure.

Le premier faisceau 55 lumineux et le deuxième faisceau 68 lumineux traversent la paroi 16 à ladite hauteur « h ».

L'organe 62 de mesure de l'intensité du premier faisceau 55 lumineux après son passage à travers au moins une épaisseur de la paroi 16 est ici formé par le spectromètre 74 du dispositif 64 de mesure de l'épaisseur. Le dispositif 56 de mesure du facteur de transmission et le dispositif 64 de mesure de l'épaisseur comportent ainsi un unique spectromètre 74 commun. Ceci permet avantageusement de réduire le coût de fabrication de l'installation 10.

Cette configuration est rendue possible par le fait que le premier faisceau 55 lumineux et le deuxième faisceau 68 lumineux sont coaxiaux et de sens contraires. En effet, le premier faisceau 55 après avoir traversé les deux épaisseurs de paroi 16, ressort de la préforme 12 dans l'axe de l'organe 72 de séparation qui recueille ainsi ce premier faisceau 55 lumineux transmis en direction du spectromètre 74.

En outre, pour permettre cette configuration, il est préférable que la première longueur d'onde « λ1 » du premier faisceau 55 lumineux monochromatique soit en dehors de la plage de longueurs d'ondes « λ2 » du deuxième faisceau 68 lumineux.

Pour éviter toute erreur de mesure, il est préférable qu'il demeure un intervalle 80 libre entre la première longueur d'onde « λ1 » du premier faisceau 55 lumineux monochromatique et la borne « λ2-min » ou « λ2-max » la plus proche de la plage de longueurs d'onde « λ2 » du deuxième faisceau 68 lumineux.

C'est ici le cas, puisque la première longueur d'onde « λ1 » est comprise dans les plages comprises entre 800 nm et 1100 nm, ou entre 1250 nm et 1300 nm, tandis que la plage de longueurs d'ondes « λ2 » du spectre continu du deuxième faisceau 68 lumineux s'étend entre 380 nm et 780 nm, dans le cas d'un dispositif de mesure confocal, ou entre 1530 nm et 1570 nm, dans le cas d'un dispositif de mesure interférométrique.

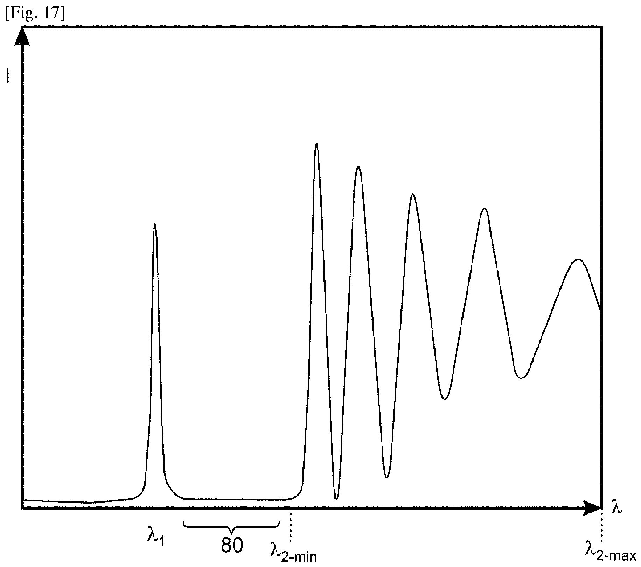

Le spectromètre 74 et/ou l'unité 54 électronique de commande peuvent ainsi identifier clairement les valeurs mesurées qui correspondent au premier faisceau 55 lumineux et les valeurs mesurées qui correspondent aux parties 68e, 68i réfléchies du deuxième faisceau 68 lumineux en se basant sur les valeurs de longueurs d'ondes mesurées, comme cela est représenté à la [Fig.16], pour le cas d'un dispositif de mesure confocal, ou à la [Fig.17] pour le cas d'un dispositif de mesure interférométrique.

Ainsi, le pic isolé correspondant à la première longueur d'onde « λ1 » correspond à la valeur utilisée pour mesurer le facteur de transmission « T », tandis que les intensités mesurées dans la plage de longueurs d'ondes « λ2 » du spectre du deuxième faisceau 68 lumineux correspondent aux valeurs utilisées pour mesurer l'épaisseur « s » de la paroi 16.

Quel que soit le mode de réalisation du procédé de détermination d'une valeur représentative du coefficient d'absorption « α » mis en œuvre, le procédé est ici réitéré pour chaque préforme passant par la ou les zones « Z, Z1, Z2 » de mesure.

Il est ainsi possible de comparer les valeurs représentatives du coefficient d'absorption « α » pour toutes les préformes 12 d'un même lot. Cette valeur étant indépendante de l'épaisseur réelle de chaque préforme 12, il est possible de savoir rapidement si un défaut de production de certains récipient 11 est dû à la qualité du matériau constituant les préformes 12 ou s'il s'agit d'un autre défaut.

De plus, il est possible de mémoriser les valeurs obtenues pour chacune des préformes 12 afin de les comparer à des valeurs obtenues pour d'autres lots de préformes 12.

En variante, le procédé n'est réalisé que sur un échantillon de préformes 12 d'un même lot, par exemple le procédé est réitéré pour une préforme 12 sur un nombre déterminé de préformes 12, par exemple une préforme sur deux ou une préforme sur trois.

## Revendications

1. Procédé de détermination d'une valeur représentative du coefficient d'absorption (α) d'un matériau thermoplastique constituant une préforme (12), lorsque la préforme (12) est transportée le long d'un trajet (34) prédéterminé dans une installation (10) de fabrication de récipients par formage de préformes (12), le procédé étant **caractérisé en ce qu'**il comporte :
- une étape (E1) de mesure d'une valeur représentative du facteur de transmission (T) d'un rayonnement infrarouge à travers au moins une paroi (16) de la préforme (12) pendant son déplacement le long du trajet (34) ; et
- une étape (E2) de mesure de l'épaisseur (s) de ladite paroi (16) de ladite préforme (12) pendant son déplacement le long du trajet (34) ;
- une étape (E3) de calcul de la valeur représentative du coefficient d'absorption (α) du matériau plastique indépendante de l'épaisseur (s) de la préforme (12) à partir de ladite mesure de la valeur représentative du facteur de transmission (T) et de ladite mesure de l'épaisseur (s).

2. Procédé selon la revendication précédente, **caractérisé en ce que** la mesure de la valeur représentative du facteur de transmission (T) et la mesure de l'épaisseur (s) sont réalisées à la même hauteur (h) de la paroi (16) de la préforme (12).

3. Procédé selon la revendication précédente, **caractérisé en ce que** la mesure de la valeur représentative du facteur de transmission (T) et la mesure de l'épaisseur (s) sont réalisées au même point de la paroi (16) de la préforme (12).

4. Procédé selon l'une quelconque des revendications précédentes, **caractérisé en ce que** la mesure de la valeur représentative du facteur de transmission (T) et la mesure de l'épaisseur (s) sont réalisées successivement en deux zones (Z1, Z2) de mesure distincte du trajet (34) de production.

5. Procédé selon l'une quelconque des revendications 1 à 3, **caractérisé en ce que** la mesure de la valeur représentative du facteur de transmission (T) et la mesure de l'épaisseur (s) sont réalisées simultanément en une même zone (Z) de mesure du trajet (34) de production.

6. Procédé selon l'une quelconque des revendications précédentes, **caractérisé en ce que** la mesure de la valeur représentative du facteur de transmission (T) est effectuée en mesurant l'atténuation de l'intensité d'un premier faisceau (55) lumineux monochromatique après son passage à travers au moins une paroi de la préforme, le premier faisceau (55) lumineux présentant une première longueur d'onde (λ1) prédéterminée et étant émis perpendiculairement à la paroi (16) de la préforme.

7. Procédé selon la revendication précédente, **caractérisé en ce que** la première longueur d'onde (λ1) prédéterminée est comprise dans le domaine des infrarouge proches, par exemple entre 800 et 1600 nm.

8. Procédé selon l'une quelconque des revendications précédentes, **caractérisé en ce que** la mesure (s) de l'épaisseur de la paroi est réalisée au moyen d'un dispositif (64) de mesure confocal qui émet un deuxième faisceau (68) lumineux de spectre continu dans une plage de longueurs d'onde (λ2) prédéterminée.

9. Procédé selon l'une quelconque des revendications précédentes, **caractérisé en ce que** la mesure de l'épaisseur (s) de la paroi (16) est réalisée par un dispositif (64) de mesure interférométrique qui émet un deuxième faisceau (68) lumineux de spectre continu dans une plage de longueurs d'onde (λ2) prédéterminée.

10. Procédé selon l'une quelconque des revendications 8 ou 9, **caractérisé en ce que** la première longueur d'onde (λ1) du premier faisceau (55) lumineux est en dehors de la plage de longueurs d'onde (λ2) du deuxième faisceau (68) lumineux.

11. Procédé selon l'une quelconque des revendications précédentes, **caractérisé en ce que** le procédé est réitéré pour chaque préforme (12) passant par la ou les zones (Z, Z1, Z2) de mesure.

12. Installation (10) pour la mise en œuvre du procédé réalisé selon l'une quelconque des revendications précédentes, l'installation (10) comportant des moyens de convoyage de préformes (12) en file le long d'un trajet (34) de production prédéterminé passant successivement à travers une zone (42) de chauffage d'un corps (14) des préformes (12) et à travers une station (32) de formage des préformes (12) en récipient (11), notamment par étirage-soufflage, l'installation (10) comportant :
- un dispositif (56) de mesure d'une valeur représentative du facteur de transmission (T) d'au moins une paroi (16) des préformes (12) lors de leur passage dans une zone (Z, Z1) de mesure associée ;
- un dispositif (64) de mesure de l'épaisseur (s) de la paroi (16) des préformes (12) leur de leur passage dans une zone (Z, Z2) de mesure associée.

13. Installation (10) selon la revendication précédente, **caractérisée en ce que** le dispositif (56) de mesure d'une valeur représentative du facteur de transmission (T) comporte une première source (58) lumineuse qui émet un premier faisceau (55) lumineux monochromatique présentant une première longueur d'onde (λ1), et le dispositif (64) de mesure de l'épaisseur (s) comporte une deuxième source (66) lumineuse, distincte de la première source (58) lumineuse, qui émet un deuxième faisceau (68) lumineux selon un spectre continu dans une plage de longueurs d'onde (λ2) prédéterminée.

14. Installation (10) selon la revendication précédente, **caractérisée en ce que** le premier faisceau (55) lumineux et le deuxième faisceau (68) lumineux traversent la paroi (16) de la préforme (12) à la même hauteur (h).

15. Installation (10) selon la revendication précédente, **caractérisée en ce que** le premier faisceau (55) lumineux et le deuxième faisceau (68) lumineux traversent la paroi (16) de la préforme au même point.

16. Installation (10) selon l'une quelconque des revendications 14 ou 15, **caractérisé en ce que** la mesure de la valeur représentative du facteur de transmission (T) et la mesure de l'épaisseur (s) sont réalisées successivement en deux zones (Z1, Z2) de mesure distincte du trajet (34) de production.

17. Installation (10) selon l'une quelconque des revendications 14 ou 15, **caractérisée en ce que** la mesure de la valeur représentative du facteur de transmission (T) et la mesure de l'épaisseur (s) sont réalisées simultanément en une même zone (Z) de mesure du trajet (34) de production.

18. Installation (10) selon la revendication précédente, **caractérisée en ce que** la première source (58) lumineuse et la deuxième source (66) lumineuse sont agencées de part et d'autre du trajet (34) de production de manière à émettre le premier faisceau (55) lumineux et le deuxième faisceau (68) lumineux coaxialement l'un vers l'autre.

19. Installation (10) selon l'une quelconque des revendications 14 à 18, **caractérisée en ce que** le dispositif (64) de mesure de l'épaisseur (s) comporte un spectromètre (74) mesurant l'intensité (1) et la longueur d'onde (λ2) de deux parties (68e, 68i) du deuxième faisceau (68) lumineux réfléchies respectivement par une face (18) externe et par une face (20) interne de la paroi (16) de la préforme (12).

20. Installation (10) selon l'une quelconque des revendications 14 à 19, **caractérisée en ce que** le dispositif (56) de mesure d'une valeur représentative du facteur de transmission (T) comporte un organe (62) de mesure de l'intensité (1) du premier faisceau (55) lumineux après avoir traversé au moins une paroi (16) de la préforme (12).

21. Installation (10) selon la combinaison des revendications 17, 19 et 18 prises en combinaison, **caractérisée en ce que** l'organe (62) de mesure du dispositif (56) de mesure d'une valeur représentative du facteur de transmission et le spectromètre (74) du dispositif de mesure de l'épaisseur sont formés par un unique spectromètre (74) commun aux deux dispositifs (56, 64).

22. Installation (10) selon l'une quelconque des revendications 14 à 21, **caractérisée en ce que** la première longueur d'onde (λ1) du premier faisceau (55) lumineux est en dehors de la plage de longueurs d'onde (λ2) du deuxième faisceau (68) lumineux.

23. Installation (10) selon l'une quelconque des revendications 12 à 22, **caractérisée en ce que** le dispositif (56) de mesure de la valeur représentative du facteur de transmission (T) et le dispositif (64) de mesure de l'épaisseur (s) sont agencés le long du trajet (34) de production en amont de la zone (42) de chauffage.

## Patentansprüche

1. Verfahren zur Bestimmung eines repräsentativen Wertes für den Absorptionskoeffizienten (α) eines thermoplastischen Materials, aus dem ein Vorformling (12) besteht, während der Vorformling (12) entlang einer vorgegebenen Strecke (34) in einer Anlage (10) zur Herstellung von Behältern durch Formen von Vorformlingen (12) transportiert wird, wobei das Verfahren **dadurch gekennzeichnet ist, dass** es Folgendes aufweist:
- einen Schritt (E1) des Messens eines repräsentativen Wertes für den Transmissionsfaktor (T) von Infrarotstrahlung durch mindestens eine Wand (16) des Vorformlings (12) während seiner Bewegung entlang der Strecke (34); und
- einen Schritt (E2) des Messens der Dicke (s) der Wand (16) des Vorformlings (12) während seiner Bewegung entlang der Strecke (34);
- einen Schritt (E3) des Berechnens des repräsentativen Wertes für den Absorptionskoeffizienten (α) des thermoplastischen Materials, unabhängig von der Dicke (s) des Vorformlings (12), ausgehend von der Messung des repräsentativen Wertes für den Transmissionsfaktor (T) und der Messung der Dicke (s).

2. Verfahren nach dem vorhergehenden Anspruch, **dadurch gekennzeichnet, dass** die Messung des für den Transmissionsfaktor (T) repräsentativen Wertes und die Messung der Dicke (s) auf gleicher Höhe (h) der Wand (16) des Vorformlings (12) durchgeführt werden.

3. Verfahren nach dem vorhergehenden Anspruch, **dadurch gekennzeichnet, dass** die Messung des für den Transmissionsfaktor (T) repräsentativen Wertes und die Messung der Dicke (s) am selben Punkt der Wand (16) des Vorformlings (12) durchgeführt werden.

4. Verfahren nach einem der vorhergehenden Ansprüche, **dadurch gekennzeichnet, dass** die Messung des für den Transmissionsfaktor (T) repräsentativen Wertes und die Messung der Dicke (s) nacheinander in zwei voneinander getrennten Messzonen (Z1, Z2) der Produktionsstrecke (34) durchgeführt werden.

5. Verfahren nach einem der Ansprüche 1 bis 3, **dadurch gekennzeichnet, dass** die Messung des für den Transmissionsfaktor (T) repräsentativen Wertes und die Messung der Dicke (s) gleichzeitig in ein und derselben Messzone (Z) der Produktionsstrecke (34) durchgeführt werden.

6. Verfahren nach einem der vorhergehenden Ansprüche, **dadurch gekennzeichnet, dass** die Messung des für den Transmissionsfaktor (T) repräsentativen Wertes dadurch erfolgt, dass die Abschwächung der Intensität eines ersten monochromatischen Lichtstrahls (55) gemessen wird, nachdem dieser mindestens eine Wand der Vorform durchdrungen hat, wobei der erste Lichtstrahl (55) eine vorbestimmte erste Wellenlänge (λ1) aufweist und senkrecht zur Wand (16) des Vorformlings emittiert wird.

7. Verfahren nach dem vorhergehenden Anspruch, **dadurch gekennzeichnet, dass** die vorbestimmte erste Wellenlänge (λ1) im nahen Infrarotbereich liegt, beispielsweise zwischen 800 und 1600 nm.

8. Verfahren nach einem der vorhergehenden Ansprüche, **dadurch gekennzeichnet, dass** die Messung der Dicke (s) der Wand mittels einer konfokalen Messvorrichtung (64) durchgeführt wird, die einen zweiten Lichtstrahl (68) mit kontinuierlichem Spektrum in einem vorgegebenen Wellenlängenbereich (λ2) emittiert.

9. Verfahren nach einem der vorhergehenden Ansprüche, **dadurch gekennzeichnet, dass** die Messung der Dicke (s) der Wand (16) durch eine interferometrische Messvorrichtung (64) erfolgt, die einen zweiten Lichtstrahl (68) mit kontinuierlichem Spektrum in einem vorgegebenen Wellenlängenbereich (λ2) emittiert.

10. Verfahren nach einem der Ansprüche 8 oder 9, **dadurch gekennzeichnet, dass** die erste Wellenlänge (λ1) des ersten Lichtstrahls (55) außerhalb des Wellenlängenbereichs (λ2) des zweiten Lichtstrahls (68) liegt.

11. Verfahren nach einem der vorhergehenden Ansprüche, **dadurch gekennzeichnet, dass** das Verfahren für jeden die Messzone(n) (Z, Z1, Z2) durchlaufenden Vorformling (12) wiederholt wird.

12. Anlage (10) zur Durchführung des Verfahrens nach einem der vorhergehenden Ansprüche, wobei die Anlage (10) Mittel zum Fördern von Vorformlingen (12) in einer Reihe entlang einer vorgegebenen Produktionsstrecke (34) aufweist, die nacheinander durch eine Zone (42) zum Erwärmen eines Körpers (14) der Vorformlinge (12) und durch eine Station (32) zum Formen der Vorformlinge (12) zu einem Behälter (11), insbesondere im Streckblasverfahren, verläuft, wobei die Anlage (10) Folgendes aufweist:
- eine Vorrichtung (56) zum Messen eines repräsentativen Wertes für den Transmissionsfaktor (T) mindestens einer Wand (16) der Vorformlinge (12) während ihres Durchlaufs durch eine zugehörigen Messzone (Z, Z1);
- eine Vorrichtung (64) zum Messen der Dicke (s) der Wand (16) der Vorformlinge (12) während ihres Durchlaufs durch eine zugehörigen Messzone (Z, Z2);

13. Anlage (10) nach dem vorhergehenden Anspruch, **dadurch gekennzeichnet, dass** die Vorrichtung (56) zum Messen eines repräsentativen Wertes für den Transmissionsfaktor (T) eine erste Lichtquelle (58) aufweist, die einen ersten monochromatischen Lichtstrahl (55) mit einer ersten Wellenlänge (λ1) emittiert, und die Vorrichtung zum Messen der Dicke (s) (64) eine von der ersten Lichtquelle (58) getrennte zweite Lichtquelle (66) aufweist, die einen zweiten Lichtstrahl (68) mit einem kontinuierlichen Spektrum in einem vorbestimmten Wellenlängenbereich (λ2) emittiert.

14. Anlage (10) nach dem vorhergehenden Anspruch, **dadurch gekennzeichnet, dass** der erste Lichtstrahl (55) und der zweite Lichtstrahl (68) die Wand (16) des Vorformlings (12) auf gleicher Höhe (h) durchdringen.

15. Anlage (10) nach dem vorhergehenden Anspruch, **dadurch gekennzeichnet, dass** der erste Lichtstrahl (55) und der zweite Lichtstrahl (68) die Wand (16) des Vorformlings am selben Punkt durchdringen.

16. Anlage (10) nach einem der Ansprüche 14 oder 15, **dadurch gekennzeichnet, dass** die Messung des für den Transmissionsfaktor (T) repräsentativen Wertes und die Messung der Dicke (s) nacheinander in zwei voneinander getrennten Messzonen (Z1, Z2) der Produktionsstrecke (34) durchgeführt werden.

17. Anlage (10) nach einem der Ansprüche 14 oder 15, **dadurch gekennzeichnet, dass** die Messung des für den Transmissionsfaktor (T) repräsentativen Wertes und die Messung der Dicke (s) gleichzeitig in ein und derselben Messzone (Z) der Produktionsstrecke (34) durchgeführt werden.

18. Anlage (10) nach dem vorhergehenden Anspruch, **dadurch gekennzeichnet, dass** die erste Lichtquelle (58) und die zweite Lichtquelle (66) auf beiden Seiten der Produktionsstrecke (34) angeordnet sind, um den ersten Lichtstrahl (55) und den zweiten Lichtstrahl (68) koaxial zueinander zu emittieren.

19. Anlage (10) nach einem der Ansprüche 14 bis 18, **dadurch gekennzeichnet, dass** die Vorrichtung (64) zum Messen der Dicke (s) ein Spektrometer (74) aufweist, das die Intensität (I) und die Wellenlänge (λ2) von zwei Teilen (68e, 68i) des zweiten Lichtstrahls (68) misst, die jeweils von einer Außenfläche (18) und einer Innenfläche (20) der Wand (16) des Vorformlings (12) reflektiert wird.

20. Anlage (10) nach einem der Ansprüche 14 bis 19, **dadurch gekennzeichnet, dass** die Vorrichtung (56) zum Messen eines repräsentativen Wertes für den Transmissionsfaktor (T) eine Messeinrichtung (62) aufweist, die die Intensität (I) des ersten Lichtstrahls (55) nach Durchdringen mindestens einer Wand (16) des Vorformlings (12) misst.

21. Anlage (10) nach Kombination der Ansprüche 17, 19 und 18, **dadurch gekennzeichnet, dass** die Messeinrichtung (62) der Vorrichtung (56) zum Messen eines repräsentativen Wertes für den Transmissionsfaktor (T) und das Spektrometer (74) der Vorrichtung zum Messen der Dicke durch ein einziges, beiden Vorrichtungen (56, 64) gemeinsames Spektrometer (74) gebildet werden.

22. Anlage (10) nach einem der Ansprüche 14 bis 21, **dadurch gekennzeichnet, dass** die erste Wellenlänge (λ1) des ersten Lichtstrahls (55) außerhalb des Wellenlängenbereichs (λ2) des zweiten Lichtstrahls (68) liegt.

23. Anlage (10) nach einem der Ansprüche 12 bis 22, **dadurch gekennzeichnet, dass** die Vorrichtung (56) zum Messen des für den Transmissionsfaktor (T) repräsentativen Wertes und die Vorrichtung (64) zum Messen der Dicke (s) entlang der Produktionsstrecke (34) vor der Heizzone (42) angeordnet sind.

## Claims

1. Method for determining a value representing the absorption coefficient (α) of a thermoplastic material forming a preform (12), when the preform (12) is conveyed along a predetermined path (34) in a facility (10) for manufacturing containers by shaping preforms (12), the method being **characterized in that** it comprises:
- a step (E1) of measuring a value representing the transmittance (T) of infrared radiation through at least one wall (16) of the preform (12) during its movement along the path (34); and
- a step (E2) of measuring the thickness (s) of said wall (16) of said preform (12) during its movement along the path (34);
- a step (E3) of computing the value representing the absorption coefficient (α) of the plastic material independent of the thickness (s) of the preform (12) based on said measurement of the value representing the transmittance (T) and said measurement of the thickness (s).

2. Method according to the preceding claim, **characterized in that** the measurement of the value representing the transmittance (T) and the measurement of the thickness (s) are carried out at the same height (h) on the wall (16) of the preform (12).

3. Method according to the preceding claim, **characterized in that** the measurement of the value representing the transmittance (T) and the measurement of the thickness (s) are carried out at the same point on the wall (16) of the preform (12).

4. Method according to any one of the preceding claims, **characterized in that** the measurement of the value representing the transmittance (T) and the measurement of the thickness (s) are successively carried out in two distinct measurement zones (Z1, Z2) of the production path (34).

5. Method according to any one of Claims 1 to 3, **characterized in that** the measurement of the value representing the transmittance (T) and the measurement of the thickness (s) are simultaneously carried out in the same measurement zone (Z) of the production path (34).

6. Method according to any one of the preceding claims, **characterized in that** the measurement of the value representing the transmittance (T) is carried out by measuring the attenuation of the intensity of a first monochromatic light beam (55) after it passes through at least one wall of the preform, with the first light beam (55) having a first predetermined wavelength (λ1) and being emitted perpendicular to the wall (16) of the preform.

7. Method according to the preceding claim, **characterized in that** the first predetermined wavelength (λ1) is within the near infrared band, for example, between 800 and 1600 nm.

8. Method according to any one of the preceding claims, **characterized in that** the measurement (s) of the thickness of the wall is carried out by means of a confocal measurement device (64) that emits a second continuous spectrum light beam (68) in a predetermined wavelength range (λ2).

9. Method according to any one of the preceding claims, **characterized in that** the measurement of the thickness (s) of the wall (16) is carried out by an interferometric measurement device (64) that emits a second continuous spectrum light beam (68) in a predetermined wavelength range (λ2).

10. Method according to any one of Claims 8 or 9, **characterized in that** the first wavelength (λ1) of the first light beam (55) is outside the wavelength range (λ2) of the second light beam (68).

11. Method according to any one of the preceding claims, **characterized in that** the method is repeated for each preform (12) passing through the one or more measurement zones (Z, Z1, Z2).

12. Facility (10) for implementing the method carried out according to any one of the preceding claims, the facility (10) comprising means for conveying preforms (12) in a line along a predetermined production path (34) successively passing through a zone (42) for heating a body (14) of the preforms (12) and through a station (32) for shaping preforms (12) into a container (11), notably by stretch-blowing, the facility (10) comprising:
- a device (56) for measuring a value representing the transmittance (T) of at least one wall (16) of the preforms (12) when they pass through an associated measurement zone (Z, Z1);
- a device (64) for measuring the thickness (s) of the wall (16) of the preforms (12) when they pass through an associated measurement zone (Z, Z2).

13. Facility (10) according to the preceding claim, **characterized in that** the device (56) for measuring a value representing the transmittance (T) comprises a first light source (58) that emits a first monochromatic light beam (55) having a first wavelength (λ1), and the device (64) for measuring the thickness (s) comprises a second light source (66), distinct from the first light source (58), that emits a second light beam (68) as a continuous spectrum in a predetermined wavelength range (λ2).

14. Facility (10) according to the preceding claim, **characterized in that** the first light beam (55) and the second light beam (68) pass through the wall (16) of the preform (12) at the same height (h).

15. Facility (10) according to the preceding claim, **characterized in that** the first light beam (55) and the second light beam (68) pass through the wall (16) of the preform at the same point.

16. Facility (10) according to any one of Claims 14 or 15, **characterized in that** the measurement of the value representing the transmittance (T) and the measurement of the thickness (s) are successively carried out in two distinct measurement zones (Z1, Z2) of the production path (34).

17. Facility (10) according to any one of Claims 14 or 15, **characterized in that** the measurement of the value representing the transmittance (T) and the measurement of the thickness (s) are carried out simultaneously in the same measurement zone (Z) of the production path (34).

18. Facility (10) according to the preceding claim, **characterized in that** the first light source (58) and the second light source (66) are arranged on either side of the production path (34) so as to emit the first light beam (55) and the second light beam (68) coaxially to each other.

19. Facility (10) according to any one of Claims 14 to 18, **characterized in that** the device (64) for measuring the thickness (s) comprises a spectrometer (74) measuring the intensity (I) and the wavelength (λ2) of two portions (68e, 68i) of the second light beam (68) respectively reflected by an outer face (18) and by an inner face (20) of the wall (16) of the preform (12).

20. Facility (10) according to any one of Claims 14 to 19, **characterized in that** the device (56) for measuring a value representing the transmittance (T) comprises a component (62) for measuring the intensity (I) of the first light beam (55) after it has passed through at least one wall (16) of the preform (12).

21. Facility (10) according to Claims 17, 19 and 18 in combination, **characterized in that** the measurement component (62) of the device (56) for measuring a value representing the transmittance and the spectrometer (74) of the thickness measurement device are formed by a single spectrometer (74) common to both devices (56, 64).

22. Facility (10) according to any one of Claims 14 to 21, **characterized in that** the first wavelength (λ1) of the first light beam (55) is outside the wavelength range (λ2) of the second light beam (68).

23. Facility (10) according to any one of Claims 12 to 22, **characterized in that** the device (56) for measuring the value representing the transmittance (T) and the device (64) for measuring the thickness (s) are arranged along the production path (34) upstream of the heating zone (42).
